# EUROPÄISCHE PATENTSCHRIFT

(11) **EP 2 302 211 B1**
(45) Veröffentlichungstag und Bekanntmachung des Hinweises auf die Patenterteilung: **27.01.2016**
(21) Anmeldenummer: 09012075.9
(22) Anmeldetag: 23.09.2009
(51) Int. Cl.: F03D 9/00

(54) **Windenergieanlagenpark, insbesondere Offshore-Windenergieanlagenpark**
Wind energy assemblies, in particular offshore wind energy assemblies
Parc éolien, notamment parc éolien en pleine mer

(43) Veröffentlichungstag der Anmeldung: 30.03.2011
(73) Patentinhaber: BARD Holding GmbH, 26725 Emden (DE)
(72) Erfinder: Wiege, Dimitri, 26123 Oldenburg (DE)
(74) Vertreter: Manasse, Uwe

(56) Entgegenhaltungen:
- WO-A1-03/025391
- BE-A6- 1 002 223
- GB-A- 2 340 319
- PERNPEINTNER R: "OFFSHORE SITING OF LARGE WIND ENERGY CONVERTER SYSTEMS IN THE GERMAN NORTH SEA AND BALTIC REGIONS" MODERN POWER SYSTEMS, WILMINGTON PUBLISHING, WILMINGTON, GB, Bd. 4, Nr. 6, 1. Juni 1984 (1984-06-01), Seiten 33-40, XP001014353 ISSN: 0260-7840

## Beschreibung

Die vorliegende Erfindung betrifft einen Windenergieanlagenpark, insbesondere Offshore-Windenergieanlagenpark mit mindestens zwei Windenergieanlagen oder -anlagengruppen. Heutzutage werden zur internen Verkabelung eines Windenergieanlagenparks folgende Netzstrukturen verwendet:
- Strahlennetzstruktur
- Ringnetzstruktur
- Maschennetzstruktur.

Verschiedene Netzstrukturen werden beispielhaft in der WO 03/025391 A1 gezeigt.

Dabei erfordert eine Strahlennetzstruktur geringste Kabellängen und am wenigstens Schutz- und Schaltgeräte. Dies gilt für Onshore-Windenergieanlagenparks und noch mehr für Offshore-Windenergieanlagenparks. Im letztgenannten Fall beruht dies auf der dabei besonders aufwendigen und teuren Kabelverlegung.

Die Strahlennetzstruktur weist jedoch auch Nachteile auf. Zum Beispiel im Falle eines Schadens auf einer Kabelstrecke in der Nähe einer Trafoplattform können gleich mehrere Windenergieanlagen ohne Verbindung zu einem Netz sein. Das hat große Ertragsausfälle sowie Schäden an den Windenergieanlagen zur Folge, die dann möglicherweise mehrere Tage ohne Eigenbedarf stehen. Es besteht die Anforderung, dass die Großkomponenten in einer Windenergieanlage fast permanent mit Strom versorgt werden sollen. Dies ist nur möglich, wenn eine Verbindung zur Trafoplattform bzw. zum Netz besteht.

Der vorliegenden Erfindung liegt somit die Aufgabe zugrunde, zumindest eines der obengenannten Probleme zu beseitigen.

Erfindungsgemäß wird diese Aufgabe gelöst durch einen Windenergieanlagenpark, insbesondere Offshore-Windenergieanlagenpark, mit mindestens zwei Windenergieanlagen oder -anlagengruppen, wobei der Windenergieanlagenpark eine interne elektrische Verkabelung aufweist, die eine modifizierte Strahlennetzstruktur aufweist, bei der die Enden zumindest eines Teils der Stränge der Strahlennetzstruktur so miteinander verbunden sind, dass mindestens eine Ringnetzunterstruktur vorliegt.

Gemäß einer besonderen Ausführungsform der Erfindung weist die modifizierte Strahlennetzstruktur n Stränge aufweist, wobei n eine gerade ganze Zahl ist. Insbesondere kann dabei vorgesehen sein, dass n ≥ 4 ist. Zudem kann die modifizierte Strahlennetzstruktur dabei m Ringnetzunterstruktur(en) aufweisen, wobei m eine ganze Zahl ist und 2 ≤m ≤n/2 ist.

Alternativ ist auch denkbar, dass die modifizierte Strahlennetzstruktur n Stränge aufweist, wobei n eine ungerade ganze Zahl ist. Insbesondere kann dabei vorgesehen sein, dass n ≥ 3 ist. Auch ist dabei denkbar, dass die modifizierte Strahlennetzstruktur m Ringnetzunterstruktur(en) aufweist, wobei m eine ganze Zahl ist und 1 ≤m ≤(n-1)/2 ist.

Der Erfindung liegt die überraschende Erkenntnis zugrunde, dass durch die modifizierte Strahlennetzstruktur die Sicherheit erreicht wird, dass die Windenergieanlagen in jedem Fall über eine Eigenbedarfsversorgung verfügen. Außerdem lässt sich damit eine Ersparnis bei den Projektkosten gegenüber einer Ring- oder Maschennetzstruktur insbesondere im Offshore-Bereich erzielen. Zudem wird durch die Ringnetzunterstruktur(en) eine höhere Verfügbarkeit und niedrigere Ausfallwahrscheinlichkeit erreicht.

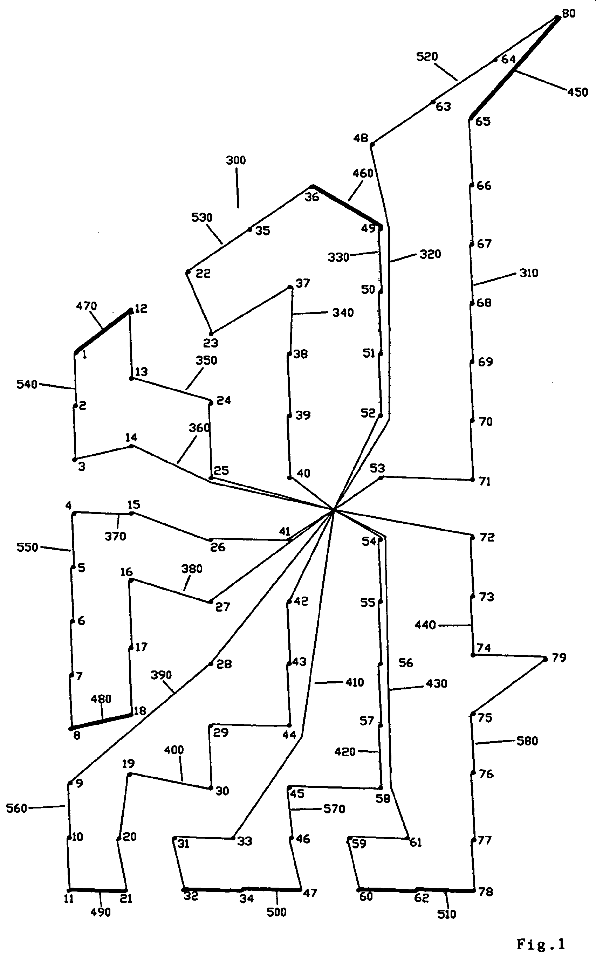

Weitere Merkmale und Vorteile aus der Erfindung ergeben sich aus den Ansprüchen und der nachfolgenden Beschreibung, in der ein Ausführungsbeispiel anhand der einzigen Figur beschrieben wird.

Die einzige Figur zeigt eine modifizierte Strahlennetzstruktur (Strahlennetzschaltung) eines Windenergieanlagenparks gemäß einer besonderen Ausführungsform der vorliegenden Erfindung. Ein Windenergieanlagenpark 300 umfasst in der besonderen Ausführungsform achtzig Windenergieanlagen, die mit den Bezugszahlen 1 bis 80 gekennzeichnet sind. Diese sind intern, d. h. Windenergieanlagenpark-intern, mittels einer modifizierten Strahlennetzstruktur elektrisch verkabelt. Besagte modifizierte Strahlennetzstruktur weist vierzehn Stränge 310, 320, 330, 340, 350, 360, 370, 380, 390, 400, 410, 420, 430 und 440 auf. Diese sind an ihren Enden durch jeweilige Brücken 450, 460, 470, 480, 490, 500 und 510 so miteinander verbunden, dass sieben Ringunterstrukturen 520, 530, 540, 550, 560, 570 und 580 entstehen. Dadurch lässt sich eine permanente Eigenbedarfsversorgung für alle Windenergieanlagen insbesondere im Offshore-Bereich erreichen.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1 - 80: Windenergieanlagen
- 300: Windenergieanlagenpark
- 310, 320, 330, 340, 350, 360, 370, 380, 390, 400, 410, 420, 430, 440: Stränge
- 450,460,470,480, 490,500,510: Brücken
- 520, 530, 540, 550, 560, 570, 580: Ringunterstrukturen

## Patentansprüche

1. Windenergieanlagenpark (300), insbesondere Offshore-Windenergieanlagenpark, mit mindestens zwei Windenergieanlagen (1-80) oder -anlagengruppen, wobei der Windenergieanlagenpark eine interne elektrische Verkabelung aufweist, die eine modifizierte Strahlennetzstruktur aufweist, bei der die Enden zumindest eines Teils der Stränge (310, 320, 330, 340, 350, 360, 370, 380, 390, 400, 410, 420, 430 und 440) der Strahlennetzstruktur so miteinander verbunden sind, dass mindestens eine Ringnetzunterstruktur (520, 530, 540, 550, 560, 570 und 580) vorliegt.

2. Windenergieanlagenpark (300) nach Anspruch 1, **dadurch gekennzeichnet, dass** die modifizierte Strahlennetzstruktur n Stränge (310, 320, 330, 340, 350, 360, 370, 380, 390, 400, 410, 420, 430 und 440) aufweist, wobei n eine gerade ganze Zahl ist.

3. Windenergieanlagenpark (300) nach Anspruch 2, **dadurch gekennzeichnet, dass** n ≥ 4 ist.

4. Windenergieanlagenpark (300) nach Anspruch 3, **dadurch gekennzeichnet, dass** die modifizierte Strahlennetzstruktur m Ringnetzunterstruktur(en) (520, 530, 540, 550, 560, 570 und 580) aufweist, wobei m eine ganze Zahl ist und 2 ≤m ≤n/2 ist.

5. Windenergieanlagenpark (300) nach Anspruch 1, **dadurch gekennzeichnet, dass** die modifizierte Strahlennetzstruktur n Stränge (310, 320, 330, 340, 350, 360, 370, 380, 390, 400, 410, 420, 430 und 440) aufweist, wobei n eine ungerade ganze Zahl ist.

6. Windenergieanlagenpark (300) nach Anspruch 5, **dadurch gekennzeichnet, dass** n ≥ 3 ist.

7. Windenergieanlagenpark (300) nach Anspruch 6, **dadurch gekennzeichnet, dass** die modifizierte Strahlennetzstruktur m Ringnetzunterstruktur(en) (520, 530, 540, 550, 560, 570 und 580) aufweist, wobei m eine ganze Zahl ist und 1 ≤m ≤(n-1)/2 ist.

## Claims

1. Wind park (300), in particular offshore wind park, having at least two wind power installations (1-80) or groups of wind power installations, wherein the wind park has internal electrical cabling which has a modified radial network structure in which the ends of at least some of the lines (310, 320, 330, 340, 350, 360, 370, 380, 390, 400, 410, 420, 430 and 440) of the radial network structure are connected to one another in such a way that at least one ring network substructure (520, 530, 540, 550, 560, 570 and 580) is obtained.

2. Wind park (300) according to Claim 1, **characterized in that** the modified radial network structure has n lines (310, 320, 330, 340, 350, 360, 370, 380, 390, 400, 410, 420, 430 and 440), wherein n is an even integer.

3. Wind park (300) according to Claim 2, **characterized in that** n is ≥ 4.

4. Wind park (300) according to Claim 3, **characterized in that** the modified radial network structure has m ring network sub-structures (520, 530, 540, 550, 560, 570 and 580), wherein m is an integer and 2 is ≤ m is ≤ n/2.

5. Wind park (300) according to Claim 1, **characterized in that** the modified radial network structure has n lines (310, 320, 330, 340, 350, 360, 370, 380, 390, 400, 410, 420, 430 and 440), wherein n is an uneven integer.

6. Wind park (300) according to Claim 5, **characterized in that** n is ≥ 3.

7. Wind park (300) according to Claim 6, **characterized in that** the modified radial network structure has m ring network sub-structures (520, 530, 540, 550, 560, 570 and 580), wherein m is an integer and 1 is ≤ m is ≤ (n-1)/2.

## Revendications

1. Parc éolien (300), en particulier parc éolien en pleine mer, comprenant au moins deux installations éoliennes (1-80) ou deux groupes d'installations éoliennes, le parc éolien présentant un câblage électrique interne qui présente une structure en réseau radial modifiée, dans laquelle les extrémités d'au moins une partie des torons (310, 320, 330, 340, 350, 360, 370, 380, 390, 400, 410, 420, 430 et 440) de la structure en réseau radial sont connectés les uns aux autres de telle sorte qu'au moins une sous-structure de réseau annulaire (520, 530, 540, 550, 560, 570 et 580) soit produite.

2. Parc éolien (300) selon la revendication 1, **caractérisé en ce que** la structure en réseau radial modifiée présente n torons (310, 320, 330, 340, 350, 360, 370, 380, 390, 400, 410, 420, 430 et 440), n un étant un nombre entier pair.

3. Parc éolien (300) selon la revendication 2, **caractérisé en ce que** n ≥ 4.

4. Parc éolien (300) selon la revendication 3, **caractérisé en ce que** la structure en réseau radial modifiée présente m sous-structures en réseau annulaires (520, 530, 540, 550, 560, 570 et 580), m étant un nombre entier et 2 ≤ m ≤ n/2.

5. Parc éolien (300) selon la revendication 1, **caractérisé en ce que** la structure en réseau radial modifiée présente n torons (310, 320, 330, 340, 350, 360, 370, 380, 390, 400, 410, 420, 430 et 440), n étant un nombre entier impair.

6. Parc éolien (300) selon la revendication 5, **caractérisé en ce que** n ≥ 3.

7. Parc éolien (300) selon la revendication 6, **caractérisé en ce que** la structure en réseau radial modifiée présente m sous-structures en réseau annulaires (520, 530, 540, 550, 560, 570 et 580), m étant un nombre entier et 1 ≤ m ≤ (n-1)/2.
